# EUROPEAN PATENT APPLICATION

(11) **EP 4 750 096 A1**
(43) Date of publication of application: **27.05.2026**
(21) Application number: 25157135.2
(22) Date of filing: 11.02.2025
(51) Int. Cl.: H04W 4/00, H04L 101/622, H04L 101/672, H04W 8/00

(54) **DISCOVERY PROCESS FOR UWB COMMUNICATION SYSTEM**

(30) Priority: 26.11.2024 IN 202441092226
(71) Applicant: NXP B.V., 5656 AG Eindhoven (NL)
(72) Inventor: Parthasarathi, Srivathsa Masthi, 5656AG Eindhoven (NL); Stark, Michael, 5656AG Eindhoven (NL)
(74) Representative: Colaiuda, Antonella

(57) **Abstract**

Systems and methods for a discovery process for contention-based ranging, wherein a UWB subsystem of a user device is configured to determine if the short MAC address allocated to the user device has been added to the ranging management list (RML) of an access control device. If the short MAC address has not been added to the RML, the user device generates a different short MAC address that is not present in the RML and responds to the access control device with the different short MAC address. This process repeats until the short MAC address has been added to the RML. If the access control device receives responses from more than one user device having the same short MAC address within the same contention period, the short MAC address will not be added to the RML.

## Description

### TECHNICAL FIELD

The present disclosure relates generally to Ultra-Wide Ban (UWB) communication systems and methods, more particularly, a contention-based ranging discovery process for an UWB device.

### BACKGROUND

Ultra-wideband (UWB) devices utilize low-energy, short-range communication, and larger bandwidths for interacting with other UWB devices. In particular, UWB communications are used for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, resulting in high precision ranging measurements. The UWB technology enables a high data throughput for communication devices and a high precision for the localization of devices.

UWB devices are widely implemented at access control devices, such as terminals or gates, to control access of users into restricted areas. The UWB access control device initiates an access control operation to provide access to the user when a distance of the communication device is detected to be within a predefined range of the UWB access control device. To discover and determine if the user device is within the predefined range of the access control device, a contention-based ranging process may be initiated by the access control device. Contention-based ranging processes are described in detail in the FiRa^{®} Medium Access Control (MAC) Technical Specification, v2.0.0 or later, FiRa^{®} Consortium.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided an Ultra-Wideband, UWB, subsystem of a user device, the UWB subsystem comprising: an UWB communication unit configured to transmit and receive messages to an access control device; and a processor operably in communication with the UWB communication unit, wherein the UWB subsystem is configured to: receive or generate a first short MAC address; receive a first initiation message for a contention-based ranging process transmitted by the access control device; transmit a first response message to the access control device, the first response message including the first short MAC address; receive a second initiation message transmitted by the access control device, wherein the second initiation message includes a first ranging management list of short MAC addresses stored by the access control device; determine if the first short MAC address is contained within the first ranging management list; in response to determining that the first short MAC address is contained within the first ranging management list, proceeding with the contention-based ranging process using the first short MAC address; and in response to determining that the first short MAC address is not contained within the first ranging management list: generate or receive a second short MAC address, wherein the second short MAC address is different to the first short MAC address and is not contained within the first ranging management list; and transmit a second response message to the access control device, the second response message containing the second short MAC address.

In some embodiments, the first initiation message may not comprise a ranging management list, or the ranging management list may be empty, for example if the access control device has not been in communication with any user devices for a given period of time.

In some embodiments, the first initiation message received comprises an initial ranging management list of short MAC addresses stored by the access control device. Accordingly, prior to transmission of the first response message, the UWB subsystem may be configured to determine if the first short MAC address is already contained in the initial ranging management list.

In response to determining that the first short MAC address is already contained in the initial ranging management list, the UWB subsystem may generate or receive a new first short MAC address, wherein the new first short MAC address is not contained within the initial ranging management list. The UWB subsystem may replace the first short MAC address with the new first short MAC address.

The second short MAC address may be generated by the UWB subsystem, or another component of the user device such as (but not limited to) a secure element or a processor unit (CPU).

Optionally, the UWB subsystem is configured to generate the second short MAC address by using a true random number generator, or a pseudo random number generator. Optionally, the UWB subsystem may be configured to generate the second short MAC address by randomising the first short MAC address.

Optionally, the UWB subsystem is configured to generate the second short MAC address by applying a predetermined operation or function to the first short MAC address. Optionally, the second short MAC address (y) may be function (f) of the first short MAC address (x), such that y=f(x). Optionally, the UWB subsystem may be configured to add a value N to the first short MAC address to generate the second short MAC address, where N is any integer greater than 0. Optionally, the UWB subsystem may be configured to swap an order of one or more digits of the first short MAC address to generate the second short MAC address.

Optionally, the UWB subsystem is configured to discard any short MAC addresses generated that match short addresses contained in the first ranging management list.

Following transmission of the second response message containing the second short MAC address, the UWB subsystem may be configured to: receive a third initiation message transmitted by the access control device, wherein the third initiation message includes a second ranging management list of short MAC addresses stored by the access control device.

The UWB subsystem may be configured to determine if the second short MAC address is contained within the second ranging management list.

In response to determining that the second short MAC address is contained within the second ranging management list, the UWB subsystem may proceed with the contention-based ranging process using the second short MAC address.

In response to determining that the second short MAC address is not contained within the second ranging management list, the UWB subsystem may generate or receive a third short MAC address, wherein the third short MAC address is different to the second short MAC address and is not contained within the second ranging management list. The UWB subsystem may transmit a third response message to the access control device, the third response message containing the third short MAC address.

Optionally, in response to determining that the second short MAC address is contained within the second ranging management list, the UWB subsystem may transmit a message providing the second short MAC address to a secure element or other component of the user device. This may inform the user device of the correct short MAC address to use in the ranging process.

Optionally, following transmission of the third response message containing the third short MAC address, the UWB subsystem may be configured to repeat the process of checking the ranging management list received from the access control device and transmitting a new or updated short MAC address until it is determined that a current short MAC address transmitted by the UWB subsystem is contained within a current ranging management list received from the access control device.

Each initiation message received from the access control device may define a contention period, and the UWB subsystem is configured to transmit each response message within the respective contention period.

Optionally, each short MAC address has a length of 2 bytes.

According to a second aspect of the present disclosure, there is provided an Ultra-Wide Band, UWB, subsystem of an access control device, the UWB subsystem comprising: a UWB communication unit configured to transmit messages; and a processor operably in communication with the UWB communication unit, wherein the UWB subsystem is configured to: transmit an initiation message as part of a contention-based ranging process, wherein the initiation message defines a contention period; receive a first response message from a first user device within the contention period, the first response message including a first short MAC address; receive a second response message from a second user device within the contention period, the second response message including a second short MAC address; compare the first short MAC address and the second short MAC address; wherein, in response to determining that the first short MAC address is different to the second short MAC address, both the first and second short MAC addresses are permitted to be added to a ranging management list of the access control device; and wherein, in response to determining that the first short MAC address is the same as the second short MAC address, neither of the first and second short MAC addresses are added to the ranging management list.

The initiation message is broadcast by the access control device and is received by any user devices within communication range of the access control device. It will be appreciated that this disclosure is not limited to only two user devices responding to an access control device within a given contention period.

In response to receiving a respective response from N user devices within the contention period of the initiation message, the UWB subsystem of the access control device is configured to compare the short MAC addresses received in all N response messages and, if any two of the N short MAC addresses are identical, this short MAC address will not be added to the ranging management list.

It will be appreciated that permitting a short MAC address to be added to the ranging management list does not necessarily mean that the short MAC address is added to the ranging management list, as this may be dependent on one or more other criterion or factors. These criterion or factors may be standard to contention-based ranging systems or such access control devices.

Optionally, the UWB subsystem is further configured to compare the first short MAC address and the second short MAC address to the ranging management list, wherein any short MAC address determined to already be present in the ranging management list is not added to be added to the ranging management list.

Optionally, in response to determining that the first short MAC address is different to the second short MAC address, the UWB subsystem is configured to add one or both of the first and second short MAC addresses to the ranging management list of the access control device if at least one criterion are satisfied. The criterion may be a proximity-based criterion, such that the user device must be within a given distance of the access control device.

According to a third aspect of the present disclosure, there is provided an UWB contention-based ranging based discovery process, comprising: generating or receiving, at a user device, a first short MAC address; receiving, at the user device, an initiation message transmitted by an access control device; transmitting, from the user device to the access control device, a first response message including the first short MAC address; receiving, at the user device, a second initiation message transmitted by the access control device, wherein the second initiation message includes a first ranging management list of short MAC addresses stored by the access control device; determining, at the user device, if the first short MAC address is contained within the first ranging management list.

In response to determining that the first short MAC address is contained within the first ranging management list, the method comprises proceeding with the contention-based ranging process using the first short MAC address.

In response to determining that the first short MAC address is not contained within the first ranging management list, the method comprises generating or receiving, at the user device, a second short MAC address, wherein the second short MAC address is not contained within the first ranging management list, and transmitting a second response message to the access control device, the second response message containing the second short MAC address.

It will be appreciated that the third aspect of the present disclosure is from the perspective of the user device and may comprise any embodiment or example of the first aspect of the present disclosure.

Optionally, the first initiation message received comprises an initial ranging management list of short MAC addresses stored by the access control device, and, prior to transmission of the first response message, the discovery process comprises determining, at the user device, if the first short MAC address is already contained in the initial ranging management list.

In response to determining that the first short MAC address is already contained in the initial ranging management list, the method comprises generating or receiving a new first short MAC address, wherein the new first short MAC address is not contained within the initial ranging management list, and replacing the first short MAC address with the new first short MAC address.

Following transmission of the second response message containing the second short MAC address, the method may further comprise receiving, at the user device, a third initiation message transmitted by the access control device, wherein the third initiation message includes a second ranging management list of short MAC addresses stored by the access control device. The method may comprise determining, at the user device, if the second short MAC address is contained within the second ranging management list.

In response to determining that the second short MAC address is contained within the second ranging management list, the method comprises proceeding with the contention-based ranging process using the second short MAC address.

In response to determining that the second short MAC address is not contained within the second ranging management list, the method may comprise generating or receiving, at the user device, a third short MAC address, wherein the third short MAC address is not contained within the second ranging management list, and transmitting a third response message to the access control device, the third response message containing the third short MAC address.

The method may comprise repeating these steps until determining, at the user device, that a current short MAC address generated by the user device is contained within a current ranging management list received from the access control device.

### BRIEF DESCRIPTION OF THE DRAWINGS

Embodiments of this disclosure will be described hereinafter, by way of example only, with reference to the accompanying drawings in which like reference signs relate to like elements and in which:
**Figure 1** shows a block diagram of a portion of a user device according to an embodiment of this disclosure;
**Figure 2** shows a block diagram of a portion of an access control device according to an embodiment of this disclosure;
**Figure 3** shows an illustration of an UWB access control environment according to an embodiment of this disclosure;
**Figure 4** is a diagram representing three consecutive blocks in a ranging process according to an embodiment of this disclosure;
**Figure 5** is a flowchart of a portion of a discovery process from the perspective of an access control device according to an embodiment of this disclosure; and
**Figure 6** is a flowchart of a portion of a discovery process from the perspective of a user device according to an embodiment of this disclosure.

### DETAILED DESCRIPTION

Embodiments of this disclosure are described in the following with reference to the accompanying drawings.

Ultra-Wideband (UWB) is a wireless communication technology that uses a wide bandwidth, typically around 500 MHz, which is suitable for short-range communications and for interacting with other UWB devices.

Contention-based ranging (CBR) is a known process, defined by FiRa^{®} standards, which allows a first UWB device (often referred to as the Initiator) to discover nearby UWB user devices (often referred to as Responders) and to determine the distance between the Initiator and each of Responder. In embodiments where the UWB system is used to control access to a resource or area, the Initiator is the access control device (such as the gate) and each Responder is a user device (such as a smart phone, or other mobile electronic device).

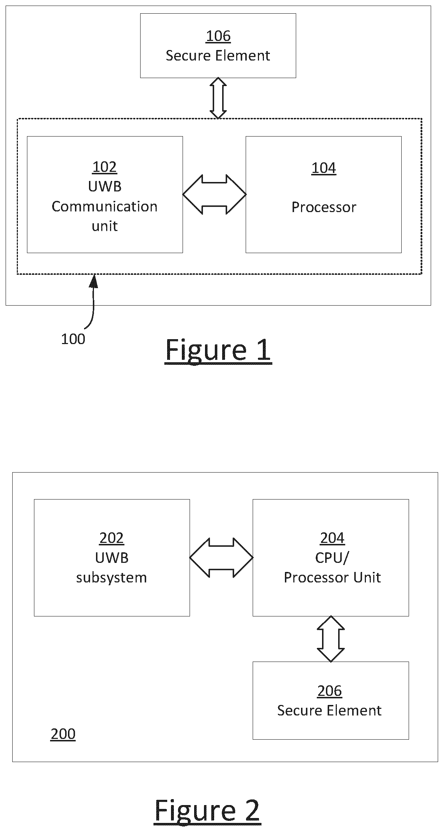

A portion of a user device is shown in Figure 1. The user device comprises a UWB subsystem 100. In this embodiment, the UWB subsystem 100 comprises at least an UWB communication unit 102 and a processor 104 operably in communication with the UWB communication unit 102. It will be appreciated that the UWB subsystem 100 may comprise additional components, such as memory. It will also be appreciated that Figure 1 is a functional block diagram. Each block may in fact represent multiple components. The UWB subsystem 100 may be provided by a chip or integrated circuit.

The UWB communication unit 102 is configured to transmit and receive UWB communication messages. It will be appreciated that a variety of suitable communication units are known in the art. The processor (or processor unit) 104 can be considered as controlling the UWB communication unit 102.

The UWB subsystem 100 is in communication with (e.g. via a secure channel protocol) a secure element 106 provided in the user device. The secure element 106 is typically a high security assurance, tamper-resistant discrete hardware on which sensitive key derivation, based on long-term secrets, can take place. Suitable secure elements are known in the art.

An embodiment of an access control device 200 is shown in Figure 2. Examples of the access control device 200 include an access control terminal, a fare collection terminal, a kiosk, a point-of-sale (POS) terminal, or the like. The access control device 200 comprises a UWB subsystem (which may be referred to as a UWB anchor) 202, a CPU or processor unit 204 and a secure element 206. The processor 204 is operably in communication with both the UWB subsystem 202 and the secure element 206. The UWB subsystem 202 may correspond to the UWB subsystem 100 of the user device, as it may comprise a communication unit, a processor, and optionally other components such as memory. It will be appreciated that the access control device 200 may comprise a variety of other components known in the art that are not the focus of the present disclosure.

The access control device 200 may include suitable circuitry that may be configured to perform one or more operations. For example, the access control device 200 may communicate with the UWB subsystem 100 (and secure element 106) of the user device to deduct fare from a financial account of the user. The secure element 206, the processor 204, and the UWB subsystem 202 may communicate with each other by way of at least one communication channel, wherein the at least one communication channel may, in some embodiments, include a serial peripheral interface (SPI), an inter-integrated channel (I2C), or the like.

In a contention-based ranging (CBR), a discovery process (or phase) is an initial procedure which allows an Initiator (i.e. access control device) to identify one or more Responders (i.e. user UWB devices). As part of the discovery process, a Medium Access Control (MAC) Address associated is used to select one user device amongst others for communication and thus is used as a unique identifier for the user device. It is known to use a short MAC address, having a length of 2 bytes, as this is preferable compared to using a longer address for the purposes of more efficient use of bandwidth.

In a congested environment, i.e., when a large number of user devices are present in the vicinity of the access control device, there can be more than one user device which has the same short MAC address. If two user devices have the same short MAC address, this is no longer a unique identifier and can result in confusion between the two user devices, such that the access control device does not know which user device it is communicating with, which can disrupt (or result in failure) of the ranging process.

The well-known "birthday problem" applies to this scenario, wherein the statistical analysis shows that there can be 12 user devices out of 100 user devices which can have same short MAC address at any point in time. In situations where there can be more than 100 user devices in the vicinity of an access control device (such as in a busy transit station) this problem becomes significant.

The IEEE MAC Header (MHR) allows for an 8 bytes or a 2 bytes addressing mode. As such, one solution to resolve the issue of clashing identical MAC addresses is to use the 8 bytes addressing mode, as the longer address means that the statical likelihood of two user devices having the same MAC address in the vicinity of the same access control device is much smaller. However, using the 8 bytes addressing modes impacts the link budget which can severely affect the use case performance as well as limiting the critical application payload (authentication APDU) transmission.

The present disclosure provides an alternative solution to this problem, which uses the 2 bytes short MAC address, to provide improved link budget, whilst still addressing said problem.

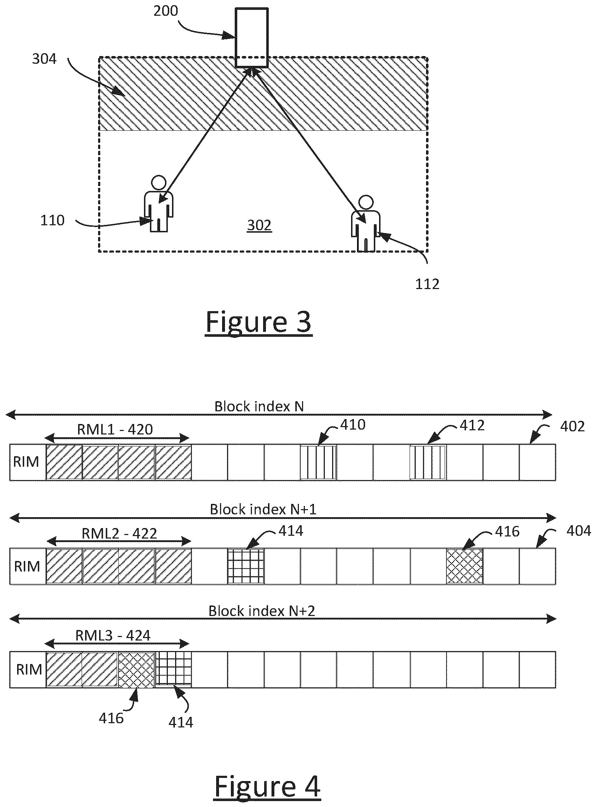

An example of an UWB access control environment is shown in Figure 3. In this embodiment, an access control device 200is provided, wherein the access control device 200 may be, but is not limited to, a gate or terminal. It will be appreciated that in other embodiments, multiple access control devices may be provided, where the number of access control devices in the environment will depend on requirements.

In Figure 3, a first user 110 and a second user 112 are approaching the access control device 200, wherein each user has a user device comprising a UWB subsystem 100 as shown in Figure 1. When the users 110, 112 enter into the authentication area 302 they are within communication range of the access control device 200, such that a discovery process for contention-based ranging can be initiated by the access control device 200. Once the user 110, 112 has been successfully authenticated, following the discovery process, if the user 110, 112 proceeds to the transaction area 304 then a transaction process can be carried out between the user 110, 112 and the access control device 200. Suitable UWB authentication processes and transaction processes are known in the art, and are not the focus of the present disclosure.

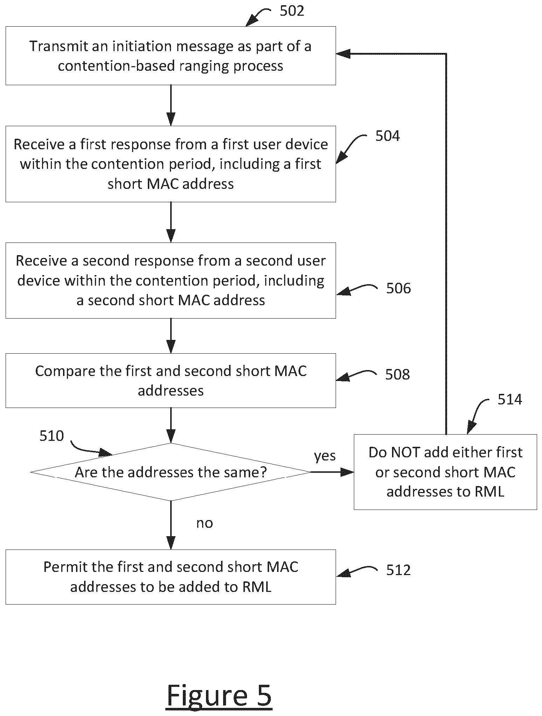

Figure 5 is a flowchart illustrating a portion of said discovery process from the perspective of an access control device, e.g. 200 in Figure 3, according to an embodiment of the present disclosure.

At step 502, the access control device transmits (or broadcasts) an initiation message. The initiation message will be received by any user devices in the communication range of the access control device. The initiation message transmitted by the access control device is typically referred to in the art as a ranging initiation message (RIM). The RIM defines a contention period (or contention access period) that is the predefined period of time within which responses must be received to the RIM. The initiation message comprises the ranging management list of the access control device (which may be empty).

At step 504, the access control device receives a first response message from a first user device (or first user UWB system) within the contention period. The first response message includes the short MAC address associated with the first user device, which can be referred to as the first short MAC address. In the present disclosure, the term "short MAC address" is used to refer to the 2 bytes address, rather than the 8 bytes address mode.

At step 506, the access control device receives a second response message from a second user device (or second user UWB system) also within the contention period. The second response message includes the short MAC address associated with the second user device, which can be referred to as the second short MAC address.

At step 508, the access control device compares the first and second short MAC address. At step 510 the access control device determines, based on this comparison, whether or not the two addresses are identical. It will be appreciated that in practice the access control device may receive three or more response messages within the contention period, such that steps 508 and 510 comprise comparing all of the short MAC addresses received within the contention period to determine whether any two addresses are identical to each other. Thus, the present disclosure is not limited by a number of user devices that may interact with the access control device.

If, following this comparison, the first and second short MAC addresses are determined to be different (i.e. not identical), then at step 512, both the first and second short MAC address are permitted to be added to the ranging management list (RML). The ranging management list is a list of short MAC addresses stored by the access control device for use in the ranging process. The RML is typically included as a field in the RIM transmitted by the access control device. Once the short MAC address has been entered into the RML, the user device associated with said short MAC address can continue with the ranging process as the user identifier has been stored.

It will be appreciated that being permitted to be added to the RML does not necessarily means that the first or second short MAC address is added to the RML. After determining that the addresses are different, one or more additional criterion may have to be satisfied for the short MAC address to be added to the RML. For example, the access control device may determine, from the response messages received, the distance between the access control device and the respective user device. If the user device is not within a predetermined range or proximity of the access control device then the respective short MAC address may not be added to the RML. Addition criterion may also be applied, as known in the art.

If, following the comparison at step 508, the first and second short MAC addresses (or any two short MAC addresses received within the contention period) are found to be identical, then at step 514, neither of these short MAC addresses is entered into the RML. The method then returns to step 502 and the process is repeated for the next time slot in the ranging process.

Consequently, as a result of step 514, a short MAC address that is being used by two or more user devices (e.g. users 110, 112 in Figure 3) at the same contention period to correspond with the same access control device (e.g. 200 in Figure 3) will not be entered into the ranging management list. This means that the given short MAC address cannot be used in the ranging process to identify a user device, and so any clash between identical short MAC addresses is avoided.

In some embodiments (not shown in Figure 5) the access control device may be further configured to compare the first short MAC address and the second short MAC address to the ranging management list (RML), wherein any short MAC address determined to already be present in the ranging management list is not added to be added to the ranging management list. In other embodiments, this step may not be required, for example if the user devices are configured to not transmit a short MAC address to the access control device that is already present in the RML (at the time of transmission).

Figure 4 is a diagram representing three consecutive blocks (N, N+1, N+2) in the contention-based ranging process for users 110, 112 in Figure 3.

At block 0 of the ranging process a ranging initiation message (RIM) is transmitted by an access control device 200 and is receiving by the UWB subsystem 100 of each user device (i.e. users 110, 112) within communication range of the access control device 200. The UWB subsystem 100 of each user device may use the RIM to synchronize to the access control device 200.

In this embodiment, the RIM received at block 0 includes a first ranging management list (RML1) 420, comprising the short MAC addresses stored by the access control device. It will be appreciated that in some embodiments, at block 0, the first ranging management list RML1 may be empty if the access control device 200 does not have any short MAC addresses stored (e.g. because no user devices have interacted with the access control device 200 in a given period of time).

Each UWB subsystem 100 (e.g. each processor 104) checks that a first short MAC address allocated to the user device is not already present in RML1 420. The first short MAC address may be generated by the user device (e.g. the secure element 106, or the UWB subsystem 100 or by another application or program external to the UWB subsystem) or the first short MAC address may be received by UWB system from an external resource. If the first short MAC address allocated to the user device is already present in RML1 420 then a new first short MAC address is generated or received by the UWB subsystem 100. It will be appreciated that in some embodiments the first MAC address allocated to each user device may be selected such that it is not already contained in the RML1, or as mentioned above the RML1 may be empty.

At block N, a contention period 402 for responding to the RIM is represented by 15 slots. A first response message 410 is sent by the UWB subsystem of the first user device (i.e. user 110) to the access control device, within the contention period 402, wherein the first response message 410 includes the first (or new first) short MAC address allocated to the first user device. A first response message 412 is also sent by the UWB subsystem 100 of the second user device (i.e. user 112) to the access control device, within the contention period 402, wherein the first response message 412 includes the first (or new first) short MAC address allocated to the second user device.

As represented by the hatching of the first response messages 410, 412, in this embodiment the first short MAC address of the first user device is identical to the first short MAC address of the second user device. Thus, upon processing the responses 410, 412 the access control device does not add the first short MAC address (from either response 410 or 412) into the ranging management list RML1 420.

At block N+1, each UWB system 100 receives a second message (i.e. second RIM) from the access control device, the second message comprising an updated ranging management list RML2 422 from the access control device. It will be appreciated that the second ranging management list RML2 may be identical to the first ranging management list RML1 420 (unless other user devices also responded to the access control device within the previous contention period 402). Each UWB subsystem 100 of the user devices is configured to determine whether the first short MAC address that was contained in the respective response message 410, 412 is present in RML2 422. In this embodiment, the first short MAC address is not contained in RML2 422.

Accordingly, at block N+1 within the contention period 404, the UWB subsystem 100 of the first user device transmits a response message 414 to the access control device containing a second short MAC address, which is generated or received by the UWB subsystem 100 e.g. by randomizing or applying an operation/function to the first short MAC address. The UWB subsystem 100 checks prior to transmission that the second short MAC address is not already present in RML2 422. In addition, the UWB subsystem 100 of the second user device transmits a response message 416 to the access control device with the contention period 404 containing a second short MAC address, which is generated or received by the UWB subsystem 100 e.g. by randomizing or applying an operation/function to the first short MAC address. The UWB subsystem 100 checks prior to transmission that the second short MAC address is not already present in RML2 422.

As represented by the hatching of the second response messages 414, 416, in this embodiment the second short MAC address of the first user device is different to the second short MAC address of the second user device. Thus, upon processing the responses 414, 416 the access control device is permitted to add both of the second short MAC addresses into the ranging management list, dependent on any additional criterion to be met. The second short MAC addresses may only be added to the ranging management list if one or more additional criterion are satisfied (e.g. the user device is within a given proximity of the access control device).

At block N+2, each UWB system 100 receives a further message (RIM) comprising an updated ranging management list RML3 424 from the access control device. each UWB subsystem 100 is configured to determine whether the second short MAC address contained in the respective response message 414, 416 is present in RML3 424. In this embodiment, each second short MAC address is contained in RML3 424. Accordingly, the randomization process is terminated by each UWB system 100, and both user devices use the respective second short MAC address from block N+2 onwards in the ranging process.

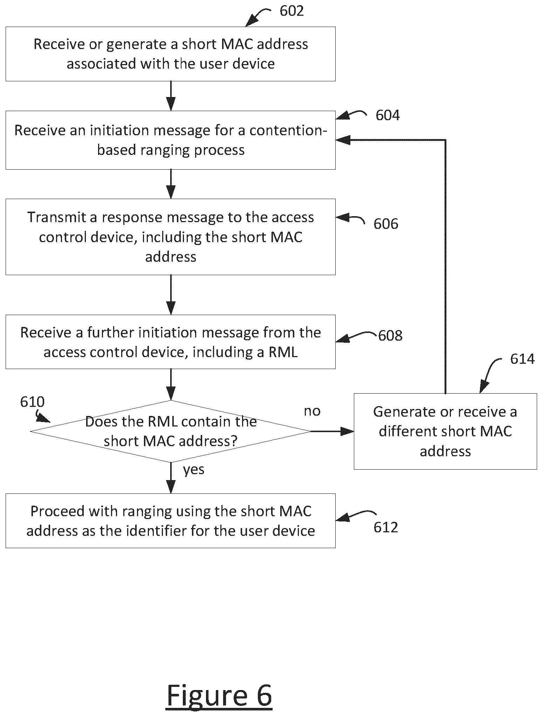

Figure 6 is a flowchart illustrating a portion of the discovery process from the perspective of a user device, e.g. user 110 or 112 in Figure 3, according to an embodiment of the present disclosure.

At step 602, the user device generates or receives a short MAC address to be used as an identifier for the user device in the ranging process. In some embodiments, the short MAC address may be generated by the UWB subsystem 100, or the secure element 106, or another component of the user device.

At step 604, the method comprises receiving an initiation message (or RIM) for a contention-based ranging process from an external access control device. In this embodiment, the initiation message does not comprise a ranging management list, or the ranging management list is empty.

If the initiation message received at step 604 comprises a ranging management list, then the process comprises additional steps (not shown) wherein the UWB subsystem 100 will check whether the short MAC address from step 602 is already contained in the ranging management list, as this would mean that the address is already being used by a different user device in contact with the access control device. If the short MAC address from step 602 is already contained in the ranging management list then the user device receives or generates a new short MAC address that is not contained in the ranging management list.

At step 606, the UWB subsystem 100 (e.g. the UWB communication unit 102) of the user device transmits a response message (i.e. a UWB message) to the access control device, said response message including the short MAC address from step 602.

At step 608, the user device receives a further initiation message (RIM) from the access control device, the message including a ranging management list (RML) comprising a list of short MAC addresses that have been accepted or stored by the access control device (i.e. the short MAC addresses being used by other user devices that are currently in contact with the access control device).

At step 610, the processor 104 of the UWB subsystem 100 of the user device checks the ranging management list received at step 608 to determine whether the short MAC address transmitted by the user device at step 606 has been entered into said ranging management list.

If the short MAC address of the user device has been entered into the ranging management list, then the method proceeds to step 612 and the UWB subsystem 100 continues with the ranging process using the short MAC address as the identifier for the user device. This means that no other user device responded to the same access control device within the same contention period using the same short MAC address, so the user device in question can continue to use the short MAC address as an identifier without risk of conflict with another user device in the ranging process.

If, on the other hand, the short MAC address has not been entered into the ranging management list, this means that the access control device did not add the short MAC address to the ranging management list as responses were received from at least one other user device in the same contention period using the same short MAC address. The method then proceeds to step 614 and the UWB subsystem 100 generates or receives a different short MAC address that is not contained in the ranging management list received at step 608 (i.e. the new short MAC address is not already being used as an identifier for a different user device in the ranging process).

In some embodiments, the UWB subsystem 100 may generate the new short MAC address by applying a function or operation to the first short MAC address (from step 602). Optionally, the UWB subsystem may increase a number of the short MAC address by 1, or may swap two digits of the short MAC address, or may randomize the short MAC address. It will be appreciated that these are non-exhaustive examples of the present disclosure. If the UWB subsystem 100 generates a new short MAC address that is already present in the ranging management list received, then this short MAC address is discarded and the process (e.g. randomization or the application or the operation / function) is repeated. In some embodiments, the UWB subsystem 100 may be able to input the short MAC addresses from the ranging management list as excluded values, to ensure that the generator outputting the new short MAC address (e.g. the true random number generator, or a pseudo random number, processor etc.) does not output a short MAC address already present in the ranging management list.

Following generation of the new short MAC address, the method returns to step 602 and the method is continually repeated until arriving at step 612. Thus, any potential conflict between user devices using the same short MAC address has been successfully avoided, without the need to use longer MAC addresses (e.g. 8 bytes).

Whilst the method in Figure 6 has been described for an embodiment where the user device is communicating with a single access control device, it will be appreciated that a user device may be communicating with multiple access control devices during an overlapping period of time, such that this method can be repeated for any number of access control devices.

It will be appreciated that the method of the present invention could form part of any contention-based ranging process, such as a Hybrid UWB scheduling process.

Accordingly, there has been described systems and methods for a discovery process for contention-based ranging, wherein a processor of a UWB subsystem of a user device is configured to determine if the short MAC address allocated to the user device has been added to the ranging management list (RML) of an access control device. If the short MAC address has not been added to the RML, the user device generates a new short MAC address not present in the RML and responds to the access control device with the new short MAC address. This process repeats until the short MAC address has been added to the RML. If the access control device receives responses from more than one user device having the same short MAC address within the same contention period, the short MAC address will not be added to the RML.

Although particular embodiments of this disclosure have been described, it will be appreciated that many modifications/additions and/or substitutions may be made within the scope of the claims.

## Claims

1. An Ultra-Wideband, UWB, subsystem of a user device, the UWB subsystem comprising:
an UWB communication unit configured to transmit and receive messages to an access control device; and
a processor operably in communication with the UWB communication unit, wherein the UWB subsystem is configured to:
receive or generate a first short MAC address;
receive a first initiation message for a contention-based ranging process transmitted by the access control device;
transmit a first response message to the access control device, the first response message including the first short MAC address;
receive a second initiation message transmitted by the access control device, wherein the second initiation message includes a first ranging management list of short MAC addresses stored by the access control device;
determine if the first short MAC address is contained within the first ranging management list;
in response to determining that the first short MAC address is contained within the first ranging management list, proceeding with the contention-based ranging process using the first short MAC address; and
in response to determining that the first short MAC address is not contained within the first ranging management list:
generate or receive a second short MAC address, wherein the second short MAC address is different to the first short MAC address and is not contained within the first ranging management list; and
transmit a second response message to the access control device, the second response message containing the second short MAC address.

2. The UWB subsystem of claim 1, wherein the first initiation message received comprises an initial ranging management list of short MAC addresses stored by the access control device, wherein, prior to transmission of the first response message, the UWB subsystem is configured to:
determine if the first short MAC address is already contained in the initial ranging management list; and
in response to determining that the first short MAC address is already contained in the initial ranging management list, generate or receive a new first short MAC address, wherein the new first short MAC address is not contained within the initial ranging management list; and
replace the first short MAC address with the new first short MAC address.

3. The UWB subsystem of claim 1 or claim 2, wherein the UWB subsystem is configured to generate the second short MAC address by:
using a true random number generator, or a pseudo random number generator; or
applying a predetermined operation or function to the first short MAC address.

4. The UWB subsystem of claim 3, wherein the UWB subsystem is configured to discard short MAC addresses generated that match short addresses contained in the first ranging management list.

5. The UWB subsystem of any preceding claim, wherein following transmission of the second response message containing the second short MAC address, the UWB subsystem is configured to:
receive a third initiation message transmitted by the access control device, wherein the third initiation message includes a second ranging management list of short MAC addresses stored by the access control device;
determine if the second short MAC address is contained within the second ranging management list;
in response to determining that the second short MAC address is contained within the second ranging management list, proceed with the contention-based ranging process using the second short MAC address; and
in response to determining that the second short MAC address is not contained within the second ranging management list,
generate or receive a third short MAC address, wherein the third short MAC address is different to the second short MAC address and is not contained within the second ranging management list; and
transmit a third response message to the access control device, the third response message containing the third short MAC address.

6. The UWB subsystem of claim 5, wherein, in response to determining that the second short MAC address is contained within the second ranging management list, the UWB subsystem is further configured to:
transmit a message providing the second short MAC address to a secure element or other component of the user device.

7. The UWB subsystem of claim 5 or claim 6, wherein, following transmission of the third response message containing the third short MAC address, the UWB subsystem is configured to repeat the steps of claim 5 until determining that a current short MAC address transmitted by the UWB subsystem is contained within a current ranging management list received from the access control device.

8. The UWB subsystem of any preceding claim, wherein each initiation message received from the access control device defines a contention period, and the UWB subsystem is configured to transmit each response message within the respective contention period.

9. The UWB subsystem of any preceding claim, wherein each short MAC address has a length of 2 bytes.

10. An Ultra-Wideband, UWB, subsystem of an access control device, the UWB subsystem comprising:
a UWB communication unit configured to transmit messages; and
a processor operably in communication with the UWB communication unit, wherein the UWB subsystem is configured to:
transmit an initiation message as part of a contention-based ranging process, wherein the initiation message comprises a ranging management list of the access control device and defines a contention period;
receive a first response message from a first user device within the contention period, the first response message including a first short MAC address;
receive a second response message from a second user device within the contention period, the second response message including a second short MAC address;
compare the first short MAC address and the second short MAC address;
wherein, in response to determining that the first short MAC address is different to the second short MAC address, both the first and second short MAC addresses are permitted to be added to the ranging management list; and
wherein, in response to determining that the first short MAC address is the same as the second short MAC address, neither of the first and second short MAC addresses are added to the ranging management list.

11. The UWB subsystem of claim 10, wherein the UWB subsystem is further configured to:
compare the first short MAC address and the second short MAC address to the ranging management list, wherein any short MAC address determined to already be present in the ranging management list is not added to be added to the ranging management list.

12. The UWB subsystem of claim 10 or claim 11, wherein, in response to determining that the first short MAC address is different to the second short MAC address, the UWB subsystem is configured to add one or both of the first and second short MAC addresses to the ranging management list of the access control device if at least one criterion are satisfied.

13. An UWB contention-based ranging based discovery process, comprising:
generating or receiving, at a user device, a first short MAC address;
receiving, at the user device, an initiation message transmitted by an access control device;
transmitting, from the user device to the access control device, a first response message including the first short MAC address;
receiving, at the user device, a second initiation message transmitted by the access control device, wherein the second initiation message includes a first ranging management list of short MAC addresses stored by the access control device;
determining, at the user device, if the first short MAC address is contained within the first ranging management list;
in response to determining that the first short MAC address is contained within the first ranging management list, proceeding with the contention-based ranging process using the first short MAC address; and
in response to determining that the first short MAC address is not contained within the first ranging management list:
generating or receiving, at the user device, a second short MAC address, wherein the second short MAC address is not contained within the first ranging management list;
transmitting a second response message to the access control device, the second response message containing the second short MAC address.

14. The discovery process of claim 13, wherein following transmission of the second response message containing the second short MAC address, the process further comprises:
receiving, at the user device, a third initiation message transmitted by the access control device, wherein the third initiation message includes a second ranging management list of short MAC addresses stored by the access control device;
determining, at the user device, if the second short MAC address is contained within the second ranging management list;
in response to determining that the second short MAC address is contained within the second ranging management list, proceeding with the contention-based ranging process using the second short MAC address; and
in response to determining that the second short MAC address is not contained within the second ranging management list,
generating or receiving, at the user device, a third short MAC address, wherein the third short MAC address is not contained within the second ranging management list;
transmitting a third response message to the access control device, the third response message containing the third short MAC address.

15. The discovery process of claim 14, wherein, following transmission of the third response message containing the third short MAC address, the process further comprises:
repeating the steps of claim 14 until determining, at the user device, that a current short MAC address generated by the user device is contained within a current ranging management list received from the access control device.
